# EUROPÄISCHE PATENTANMELDUNG

(11) **EP 3 228 960 A1**
(43) Veröffentlichungstag der Anmeldung: **11.10.2017**
(21) Anmeldenummer: 16164474.5
(22) Anmeldetag: 08.04.2016
(51) Int. Cl.: F25D 3/00

(54) **VAKUUMISOLATIONSELEMENT, VAKUUMISOLATIONSVERPACKUNG UND VAKUUMISOLATIONSKISTE**

(71) Anmelder: ROTTER, Thomas, 65239 Massenheim (DE)
(72) Erfinder: ROTTER, Thomas, 65239 Massenheim (DE)
(74) Vertreter: Blumbach Zinngrebe

(57) **Zusammenfassung**

Die Erfindung betrifft ein Vakuumisolationselement (10), bei welchem ein Kern (12) in einer vakuumdichten Umhüllung (14) evakuiert ist, sowie eine Vakuumisolationsverpackung und eine Vakuumisolationskiste, wobei der Kern von einem oder mehreren Elementen gebildet wird, die eine formgebende Struktur aufweisen, welche ein Isolationsvolumen bildet, welches in der Umhüllung evakuiert wird. Ggf. kann das Füllgut im Nutzvolumen in einem Arbeitsschritt mit vakuumiert werden.

## Beschreibung

### Gebiet der Erfindung

Die Erfindung betrifft ein Vakuumisolationselement, bei welchem ein Kern in einer vakuumdichten Umhüllung evakuiert ist, wobei der Kern insbesondere aus Hohlraum-bildenden Plattenelementen besteht, sowie eine Vakuumisolationsverpackung und eine Vakuumisolationskiste.

### Hintergrund der Erfindung

Für verschiedene Anwendungen werden kleine und leichte Wärmeisolierungen gegebenenfalls für nur begrenzte Zeit verlangt. So wird im heutigen Onlinehandel Käse, Fleisch oder andere temperaturgeführte Ware verschickt. Beim Versand von Arzneimitteln wird seit geraumer Zeit für temperaturempfindliche Arzneimittel der Nachweis des temperaturgeführten Transportes verlangt.

Für diese Anwendungen sind trotzdem noch keine technisch und wirtschaftlich optimalen Lösungen im Einsatz. Bisher wurden z.B. Kisten aus geschäumten Polystyrol (Styropor@) verwendet. Diese sind jedoch teuer und bei der gewünschten Isolationswirkung typischerweise recht voluminös. Darüber hinaus ist eine Entsorgung von geschäumten Kunststoffen aufwändig.

Eine bessere Isolationswirkung bieten Isolationsboxen mit integrierten Vakuumisolationselementen, wie sie in der DE 103 22 764 A1 beschrieben sind. Diese Vakuumisolationselemente bestehen typischerweise aus porösem Material, das in einer Hülle evakuiert wird. Boxen mit diesen Vakuumisolationselementen sind jedoch teuer in der Herstellung und aufwändig zu entsorgen. Um dies zu kompensieren, werden solche Boxen daher typischerweise mehrfach wiederverwendet. Im Versandhandel ist daher ein Rückführungsystem nötig. Für den Versand von eher kleinen und/oder günstigen Waren ist eine solche Lösung daher nicht optimal.

Die EP 1 475 486 beschreibt Vakuumisolationselemente, bei welchen in einer metallisch beschichteten Umhüllung eine flächige Wärmdämmplatte aus Schaum, Fasermaterial oder porösem Material evakuiert ist. Die Herstellung solcher Vakuumisolationselemente bedarf spezieller Vorrichtungen und ist umständlich und daher kostenintensiv. Ferner sind auch die Entsorgung bzw. das Recycling der verwendeten Materialien aufwändig.

Vakuumisolationselemente in Form von flächigen Vakuumisolationspaneelen sind auch im Bauwesen interessant, da sie bei gleichem U-Wert ggf. dünner ausgebildet sein können als herkömmliche Wärmedämmung wie z.B. Platten aus geschäumtem Polystyrol.

### Allgemeine Beschreibung der Erfindung

Die Erfindung hat sich daher die Aufgabe gestellt, ein Vakuumisolationselement, eine Vakuumisolationsverpackung bzw. eine Vakuumisolationskiste bereit zu stellen, welche kostengünstig und mit geringem Aufwand herstellbar sind und mit denen das Verpacken der Ware wenig Aufwand erzeugt.

Ein weiterer Aspekt der Aufgabe ist es, ein Vakuumisolationselement, eine Vakuumisolationsverpackung bzw. eine Vakuumisolationskiste bereit zu stellen, welche einfach und kostengünstig entsorgt bzw. recycelt werden können, so dass insbesondere eine Einweg-Verwendung ökonomisch und ökologisch vertretbar ist.

Ein weiterer Aspekt der Aufgabe ist es, Vakuumisolationselement, eine Vakuumisolationsverpackung bzw. eine Vakuumisolationskiste bereit zu stellen, welche ein geringes Gewicht aufweisen.

Ein weiterer Aspekt der Aufgabe ist es, ein Vakuumisolationselement, eine Vakuumisolationsverpackung bzw. eine Vakuumisolationskiste bereit zu stellen, welche in einfacher Weise vom Verwender beim Verpacken der Ware, angepasst an die zu verpackende Ware, selbst hergestellt bzw. selbst konfektioniert werden können.

Die Aufgabe der Erfindung wird durch den Gegenstand der unabhängigen Ansprüche gelöst. Vorteilhafte Weiterbildungen der Erfindung sind in den Unteransprüchen definiert.

Erfindungsgemäß wird ein Vakuumisolationselement, insbesondere in Form eines Vakuumisolationspaneels ("VIP") bereitgestellt, welches einen Kern und eine flexible vakuumdichte Umhüllung umfasst bzw. hieraus besteht. Der Kern ist in der Umhüllung vakuumdicht eingeschlossen und evakuiert und ist zumindest soweit formstabil, dass der Kern im evakuierten Zustand ein evakuiertes Isolationsvolumen innerhalb der Umhüllung entgegen dem atmosphärischen Druck, der auf der Umhüllung lastet, aufrechterhält. Der Kern bildet dabei ein Isolationsvolumen aus einer Mehrzahl von Hohlräumen, wobei in dem evakuierten Zustand das Isolationsvolumen von dem Kern aufrechterhalten wird.

Der Kern wird wiederum von einem oder mehreren Plattenelementen gebildet, die eine formgebende Struktur aufweisen, derart, dass die Vielzahl der Hohlräume mittels einer formgebenden aus der Schichtebene in die dritte Dimension herausgeformten Struktur einer Schicht des jeweiligen Plattenelements gebildet wird.

Im Fall eines Plattenelementes (i) werden die Hohlräume von der formgebenden Struktur innerhalb des Plattenelements und/oder zwischen Vertiefungen der formgebenden Struktur des Plattenelements und der Umhüllung gebildet, und im Fall mehrerer Plattenelemente (ii) werden die Hohlräume von der formgebenden Struktur innerhalb der Plattenelemente, zwischen den Plattenelementen und/oder zwischen Vertiefungen der formgebenden Struktur des Plattenelements und der Umhüllung gebildet.

Die Hohlräume kommunizieren zumindest beim Evakuieren miteinander, um innerhalb der Umhüllung gemeinsam evakuiert zu werden.

Anders als bei einem kompakten porösen Material enthält die formgebende Struktur des oder der Plattenelemente demnach vorzugsweise zumindest eine dreidimensional ausgeformte Schicht, welche eine Ebene in der ersten und zweiten Dimension (x, y) definiert und so verformt ist, dass sich die formgebenden Strukturen in die Dimension senkrecht (dritte Dimension z) zur Schichtebene (x, y) erstrecken, um definiert die Hohlräume zu bilden. Diese Formgebung der Schicht kann z.B. eine Wellenform oder eine Noppenform sein. Allerdings sind auch andere Formen möglich, sofern durch die dreidimensionale Formgebung der dünnen Schicht Hohlräume geschaffen werden. Die definierten Hohlräume sind dabei vorzugsweise regelmäßig angeordnet und werden insbesondere durch Vertiefungen, z.B. Wellentäler oder Noppentäler, der dreidimensional ausgeformten Schicht auf einer oder auf beiden Seiten der Schicht durch die ausgeformte Struktur der Schicht gebildet. Mit anderen Worten ist die dreidimensional ausgeformte Schicht senkrecht zur Schichtebene verformt, z.B. geprägt, um beidseits der Schicht die Vertiefungen zu erzeugen, welche die Hohlräume bilden. Die Schicht kann also z.B. in Wellen oder mit Noppen geformt sein, um solche Vertiefungen zu bilden.

Mit anderen Worten enthalten die Plattenelemente demnach zumindest eine in die dritte Dimension senkrecht zur Schichtebene geformte Schicht. Mathematisch ausgedrückt enthält die geformte Schicht eine Mehrzahl von gekrümmten zweidimensionalen Flächenstücken. Somit weisen die Vertiefungen der geformten Schichten gekrümmte Oberflächen, insbesondere lokale Minima und Maxima der Funktion F(x,y) des Oberflächenverlaufs auf, wobei x und y die erste und zweite Dimension, d.h. die x-y-Ebene definieren, in welcher sich die geformte Schicht bzw. das Plattenelements grundsätzlich erstreckt. Oder anders ausgedrückt gilt für die makroskopische Oberflächenfunktion der geformten Schicht F(x,y)≠konstant.

In vorteilhafter Weise kann ein solches Vakuumisolationselement einerseits kostengünstig und mit geringem Aufwand hergestellt werden und kann andererseits ökonomisch sowie ökologisch günstig wieder entsorgt oder recycelt werden. Das Plattenelement bzw. die geformte Schicht bestehen vorzugsweise aus Pappe oder Kunststoff. Besonders geeignet als Plattenelement, das eine formgebende Struktur aufweist, sind z.B. Wellpappe oder Noppenfolie. Letztere ist z.B. im Baubereich für die Mauerdrainage als geprägte Rollenware erhältlich.

Weiter vorteilhaft ist das geringe Gewicht. Es ist in besonderem Maße vorteilhaft, dass sowohl die Plattenelemente als auch die Umhüllung vor Ort vom Verwender selbst frei konfektionierbar sind, so dass der Verwender das Vakuumisolationselement bzw. Vakuumisolationspaneel, z.B. angepasst an die zu verpackende Ware oder an sonstige Anforderungen bei der Anwendung individuell konfektionieren kann, z.B. Form, Größe, Dicke, Aussparungen etc.

Die Umhüllung, insbesondere Folien-Umhüllung, besteht demnach vorzugsweise aus einer Kunststofffolie, könnte aber für einfache Anwendungen auch aus einem beschichteten Papier bestehen. Z.B. werden eine oder mehrere die Hohlräume bildende Plattenelemente, wie z.B. Wellenfolie, Noppenfolie, Wellpappe oder Wabenpappe in die Folien-Umhüllung, die als Schlauch oder Beutel aus Kunststofffolie ausgebildet ist, gesteckt und anschließend mittels eines Vakuumierungsgeräts, wie es z.B. zum Verpacken von Lebensmitteln verwendet wird, evakuiert und verschweißt. Mit anderen Worten ist die Kunststofffolien-Umhüllung z.B. als Schlauch ausgebildet und im evakuierten Zustand beidseitig des Kerns zugeschweißt, um das evakuierte Volumen zu definieren.

Die Kunststofffolien-Umhüllung in der die Platten luftdicht verschlossen werden, kann, muss aber nicht beschichtet, z.B. metallisch beschichtet, sein. Es ist auch möglich, die Plattenelemente des Kerns metallisch zu beschichten oder mittels einer metallischen Einlage die Absorption und Emission von Wärmestrahlung zu vermindern. Da das Vakuum je nach Anwendung nicht besonders lange halten muss, z.B. im Bereich des Warenversands lediglich einige Tage oder Wochen, können für diese Anwendungen kostengünstige, einfache nicht lange luftdichte Folien verwendet werden.

Im Gegensatz zu herkömmlichem geschäumtem Polystyrol als Dämmmaterial hat das erfindungsgemäße Vakuumisolationselement bei gleicher Wärmedämmung eine geringere Dicke (kleinerer U-Wert). Gegebenenfalls kann eine Dicke von einem Achtel bis zu einem Zehntel der Dicke einer geschäumten Kunststoff-Isolation ausreichen.

Für höherwertige Anwendungen bietet es sich an, eine oder mehrere verformte Kunststoffschichten in einem Schlauch oder Beutel zu evakuieren. Die Platten sind so geformt, dass sie den auftretenden Luftdruck sowie das Gewicht der zu versendenden Ware aufnehmen und an die benachbarte Platte mit möglichst wenig Berührungspunkten weitergeben. Hierdurch kann die Wärmeisolationswirkung weiter verbessert werden.

Wenn also zumindest eines der Plattenelemente als geformte, z.B. geprägte, tiefgezogene oder anderweitig geformte, Kunststoffschicht ausgebildet ist, bildet die geformte Kunststoffschicht eine Vielzahl von Vertiefungen in einer oder beiden Oberflächen der Kunststoffschicht, z.B. bei einer Noppenfolie in Form von Noppentälern. Wie bereits ausgeführt wurde, ist eine solche Noppenfolie günstig als Rollenware für die Mauerdrainage erhältlich. Solche Rollenware kann mit einer stabileren Zusatzplatte stabilisiert werden, um die Formerhaltung beim Evakuieren zu verbessern.

Im Fall eines Plattenelementes (i) ist das Plattenelement also vorzugsweise als geformte Kunststoffschicht ausgebildet, welche eine Vielzahl von Vertiefungen definiert und die evakuierten Hohlräume werden zwischen den Vertiefungen der Kunststoffschicht und der Umhüllung gebildet und im Fall mehrerer Plattenelemente (ii) ist zumindest eines der Plattenelemente als geformte Kunststoffschicht ausgebildet und die evakuierten Hohlräume werden zwischen den Vertiefungen der zumindest einen geformten Kunststoffschicht und der Umhüllung und/oder zwischen der zumindest einen geformten Kunststoffschicht und dem/den weiteren Plattenelementen gebildet, welche sich durch die nach innen gerichteten Vertiefungen beabstandet voneinander gegeneinander abstützen.

Z.B. kann der Kern zumindest zwei invers geformte Kunststoffschichten umfassen, welche sich gegenüberstehende nach innen gerichtete Vertiefungen, z.B. nach innen gerichtete Noppentäler, aufweisen, die sich an Stützstellen an den jeweiligen Innenseiten gegeneinander abstützen, wenn der Kern innerhalb der Umhüllung evakuiert ist, um die Stützkraft gegen den Atmosphärendruck aufzubringen.

Gemäß einem Ausführungsbespiel der Erfindung können die geformten Kunststoffschichten jeweils einen Randbereich aufweisen, welche ineinander steckbar sind und sich im evakuierten Zustand gegeneinander abstützen, um einen umlaufenden randseitigen Abschluss der beiden ineinander gesteckten Kunststoffschichten zu bilden.

Hierbei kann es vorteilhaft sein, dass die geformten Kunststoffschichten Öffnungen enthalten, um den Innenbereich zwischen den Kunststoffschichten besser evakuieren zu können.

Der Kern kann allerdings auch Strukturpappen umfassen, d.h. dass das bzw. die Plattenelemente vorzugsweise als Strukturpappen ausgebildet sind. Hierfür kommen z.B. Wellpappe oder Wabenpappe in Frage, wobei z.B. die innere Wellenschicht der Wellpappe die Vertiefungen in Form von Wellentälern der gewellten Zwischenschicht definiert.

Diese Plattenelemente bestehen demnach vorzugsweise aus Pappkartonmaterial und werden ebenfalls so angeordnet und von der Festigkeit her konfektioniert, dass sie den Luftdruck sowie das Gewicht des Füllguts aufnehmen können.

Die Erfindung betrifft demnach auch die Verwendung von Strukturpappe, z.B. Wellpappe oder Wabenpappe, als in einer Umhüllung evakuierter Kern eines Vakuumisolationselements.

Der Kern kann also insbesondere aus einer Mehrzahl von Strukturpappen oder geformten Kunststoffschichten oder einer Kombination daraus bestehen.

Zur Entsorgung kann der Nutzer die Umhüllung, z.B. wenn diese aus Kunststofffolie besteht, mit einem scharfen Messer aufschneiden und den Kern entnehmen, wenn der Kern und die Folien-Umhüllung getrennt entsorgt oder recycelt werden sollen. Dies ist insbesondere bei Verwendung von Wellpappe oder Wabenpappe vorteilhaft, da diese aus Altpapier hergestellt sind und wieder ins Altpapier-Recycling gehen können, wohingegen die Kunststofffolie der Folien-Umhüllung ins Kunststoffrecycling gehen kann.

Versuche haben gezeigt, dass handelsübliche Wellpappe oder Wabenpappe auch bei großen Vakuumisolationselementen stabil genug sein können, um dem atmosphärischen Druck von bis zu 10⁵ N/m² standzuhalten.

Zur weiteren Stabilisierung des Kerns kann es vorteilhaft sein, Wellpappe oder Wabenpappe zu verwenden, die beidseitig gedeckt ist.

Weiter vorteilhaft kann der Kern mehrere flächig übereinanderliegende Schichten aus Wellpappe oder Wabenpappe umfassen, wobei die Wellpappen vorzugsweise über Kreuz gelegt werden.

Gemäß einer bevorzugten Ausführungsform der Erfindung kann der Kern einen Innenteil aus einer oder mehreren geformten Kunststoffschichten umfassen, welche auf einer oder beiden Seiten von einer bzw. zwei Strukturpappen, insbesondere Wellpappen oder Wabenpappen, abgedeckt sind. Hierbei erfüllen die Strukturpappen eine Doppelfunktion, sie wirken einerseits als Druckentlastungs- und Druckverteilungsschicht für die geformten Kunststoffschichten und andererseits tragen sie selbst zur Vergrößerung des evakuierten Isolationsvolumens in der Umhüllung bei.

Gemäß einer bevorzugten Ausführungsform der Erfindung umfasst der Kern mehrere flächig übereinanderliegende Platten, insbesondere mehrere Schichten aus Wellpappe oder Wabenpappe. Vorzugsweise weist zumindest eine der Schichten lineare Aussparungen auf, derart, dass die Aussparungen vordefinierte Knicklinien bilden. Dadurch kann das Vakuumisolationselement an den vordefinierten Knicklinien kontrolliert zu einer dreidimensionalen Raumform geknickt werden, und zwar gegebenenfalls nach dem Einfügen in die Umhüllung im nicht evakuierten und sogar auch noch im evakuierten Zustand. Dadurch wird eine hohe Flexibilität, z.B. zum Einfügen in eine äußere Transportkiste gewährleistet.

Für bestimmte Anwendungen, z.B. für die Wärmedämmung von Gebäuden kann es vorteilhaft sein, an zumindest einer Stirnseite des Kerns einen Befestigungsstreifen in die Umhüllung einzulegen und die Umhüllung zwischen dem Kern und dem Befestigungsstreifen zu verschweißen. Dadurch bleibt das Vakuum innerhalb des Kerns erhalten, auch dann wenn das Vakuumisolationselement durch die Umhüllung und den Befestigungsstreifen hindurch penetrierend befestigt, z.B. geschraubt oder genagelt wird.

In vorteilhafter Weise ist das Vakuumisolationselement zwischen dem Kern und dem zumindest einen Befestigungsstreifen ohne das Vakuum zu brechen faltbar, so dass der oder die Befestigungsstreifen z.B. senkrecht abgewinkelt werden können und das Vakuumisolationspaneel stirnseitig, z.B. zwischen zwei parallelen Balken festgeschraubt werden kann.

Die Vakuumisolationselemente eignen sich demnach zur Herstellung von Vakuumisolationsverpackungen zum Verpacken von Ware für den wärmegeführten Transport aber auch, insbesondere in Form von Vakuumisolationspaneelen, zur Anwendung im Baubereich, z.B. zur Wärmedämmung von Wänden oder zwischen Dachsparren.

Eine Vakuumisolationsverpackung gemäß einem Aspekt der Erfindung umfasst dabei einen Kern und eine flexible vakuumdichte Umhüllung, insbesondere Folienumhüllung.

Gemäß einer bevorzugten Ausführungsform umfasst die Vakuumisolationsverpackung also einen Kern oder Verpackungskern und eine flexible vakuumdichte Umhüllung,
wobei der Verpackungskern ein Nutzvolumen und ein das Nutzvolumen umgebendes Isolationsvolumen bildet,
wobei ein zu temperierendes Füllgut in dem Nutzvolumen angeordnet ist,
wobei der Verpackungskern mit dem zu temperierenden Füllgut in der Umhüllung vakuumdicht eingeschlossen und evakuiert ist, und der Verpackungskern zumindest soweit formstabil sind, dass er im evakuierten Zustand das evakuierte Isolationsvolumen innerhalb der Umhüllung entgegen dem atmosphärischen Druck, der auf der Umhüllung lastet, aufrechterhält, und
wobei das zu temperierende Füllgut gemeinsam mit dem Verpackungskern innerhalb derselben Umhüllung evakuiert ist und von dem evakuierten Isolationsvolumen thermisch isoliert wird.

Vorzugsweise ist zusätzlich zu dem zu temperierenden Füllgut ein Kühlakku oder ein Wärmespeicherelement in dem Nutzvolumen innerhalb des Verpackungskerns angeordnet und wird gemeinsam mit dem zu temperierenden Füllgut und dem Verpackungskern innerhalb derselben Umhüllung evakuiert. Dies vereinfacht die Verpackung und spart zusätzlich Kosten.

Gemäß einer Ausführungsform der Vakuumisolationsverpackung umfasst der Verpackungskern ein erstes und zweites Plattenelement, insbesondere wie vorstehend beschrieben, z.B. aus einer geformten Kunststoffschicht und/oder Strukturpappe, z.B. Wellpappe und/oder Wabenpappe, und das zu temperierende Füllgut wird, gegebenenfalls mit dem Kühlakku oder dem Wärmespeicherelement, sandwichartig zwischen dem ersten und zweiten Plattenelement angeordnet, und das zu temperierende Füllgut, gegebenenfalls zusammen mit dem Kühlakku oder dem Wärmespeicherelement, wird gemeinsam mit dem ersten und zweiten Plattenelement innerhalb derselben Umhüllung evakuiert.

Die erfindungsgemäße Vakuumisolationsverpackung eignet sich insbesondere zum Verpacken von temperaturempfindlichen Arznei- oder Lebensmitteln. Es ist besonders einfach, insbesondere für Füllgut von geringer Dicke, wie z.B. fertig portionierte Steaks, das zu temperierende Füllgut, gegebenenfalls mit dem Kühlakku oder dem Wärmespeicherelement, sandwichartig zwischen dem ersten und zweiten Formteil, welche bei dieser Ausführungsform als erstes bzw. zweites Plattenelement ausgebildet sind, anzuordnen. Dabei kann das erste und/oder zweite Plattenelement biegsam ausgebildet sein sich aufgrund des atmosphärischen Drucks um das zu temperierende Füllgut, gegebenenfalls zusammen mit dem Kühlakku oder dem Wärmespeicherelement, gebogen herumschmiegen.

Gemäß einer weiteren Ausführungsform der Vakuumisolationsverpackung umfasst der Verpackungskern zumindest ein Kunststoffformteil und/oder eine Vielzahl von übereinander geschichteten Plattenelementen, insbesondere geformten Kunststoffschichten und/oder Strukturpappen, z.B. Wellpappen und/oder Wabenpappen, welche gemeinsam das Nutzvolumen und das Isolationsvolumen bilden, wobei das zu temperierende Füllgut, gegebenenfalls mit dem Kühlakku oder dem Wärmespeicherelement, in dem so gebildeten Nutzvolumen von dem zumindest einen Kunststoffformteil und/oder den Plattenelementen umgeben angeordnet ist, und das so gebildete Nutzvolumen mit dem zu temperierenden Füllgut, gegebenenfalls mit dem Kühlakku oder dem Wärmespeicherelement, evakuiert ist und die Anordnung aus dem zumindest einen Kunststoffformteil und/oder den Plattenelementen dabei zumindest soweit formstabil ist, dass sie gemeinsam im evakuierten Zustand dem atmosphärischen Druck, der auf der Umhüllung lastet von sich aus standhalten und somit das evakuierte Nutzvolumen stabil aufrechterhalten bleibt.

Hierbei wird das zu temperierende Füllgut in das Nutzvolumen im Inneren des Verpackungskerns angeordnet, gegebenenfalls mit einem Kühlakku oder Wärmespeicherelement. Anschließend wird der Verpackungskern mit dem zu temperierenden Füllgut, und gegebenenfalls mit einem Kühlakku oder Wärmespeicherelement, in der Umhüllung vakuumdicht eingeschlossen und evakuiert. Im Fall von Kunststoffformteilen können diese auf einer dem Füllgut abgewandten Außenseite offen sein. In diesem Fall ist es zweckmäßig, die Öffnung durch eine Platte zu schließen. Jedenfalls ist der Verpackungskern zumindest soweit formstabil, dass er im evakuierten Zustand sowohl das Isolationsvolumen als auch das Nutzvolumen innerhalb der Umhüllung entgegen dem atmosphärischen Druck, der auf der Umhüllung lastet, aufrechterhält.

In vorteilhafter Weise werden das oder die KunststoffFormteile oder Kunststoff-Formhälften, formmäßig an das zu temperierende Produkt angepasst, z.B. tiefgezogen, so dass das gemeinsam von dem oder den Formteilen gebildete Nutzvolumen als Negativ-Form des zu temperierenden Produkts ausgebildet ist.

Hiermit können auch komplexere Vakuumisolationsverpackungen gebaut werden. Gemäß einer bevorzugten Ausführungsform der Erfindung umfasst der Verpackungskern demnach einen Schichtaufbau aus einer Vielzahl von Plattenelementen, insbesondere Wellpappen oder Wabenpappen und diese umgeben ein vordefiniertes Nutzvolumen und bilden, z.B. mittels der Hohlräume innerhalb der Wellpappen oder Wabenpappen, das darum liegende evakuierte Isolationsvolumen. Das zu temperierende Füllgut, gegebenenfalls mit dem Kühlakku oder dem Wärmespeicherelement, ist in dem so gebildeten Nutzvolumen von den Plattenelementen umgeben angeordnet, und das so gebildete Nutzvolumen wird mit dem zu temperierenden Füllgut, gegebenenfalls mit dem Kühlakku oder dem Wärmespeicherelement, evakuiert. Dabei ist der Schichtaufbau aus Plattenelementen zumindest insoweit formstabil, dass er im evakuierten Zustand dem atmosphärischen Druck von sich aus standhält, so dass das evakuierte Nutzvolumen trotz Evakuierung stabil aufrechterhalten bleibt. Mit anderen Worten ist der Verpackungskern insoweit formstabil, dass das Nutzvolumen von dem Verpackungskern erhalten bliebe, selbst wenn kein Füllgut enthalten wäre, d.h. dass der atmosphärische Druck im evakuierten Zustand im Wesentlichen nicht auf dem Füllgut lastet, da der atmosphärische Druck durch den das Nutzvolumen bildenden Verpackungskern abgefangen wird. Eine solche Vakuumisolationsverpackung ist z.B. für den wärmegeführten Transport von empfindlichem Füllgut wie Flaschen, z.B. Arzneimittelfläschchen mit temperatursensitivem Inhalt, z.B. Impfstoff oder Ähnliches, insbesondere aus Glas, besonders geeignet.

Eine Besonderheit dieser Ausführungsformen der Erfindung liegt demnach u.a. darin begründet, dass das zu temperierende Füllgut innerhalb des aus einem Schichtaufbau von evakuierbaren Hohlräumen bildenden Plattenelementen und/oder Kunststoffformteilen bestehenden Verpackungskerns gemeinsam mit dem Verpackungskern innerhalb derselben Umhüllung evakuiert wird und somit in demselben Arbeitsschritt wärmeisoliert verpackt und gleichzeitig vakuumiert wird. Dadurch kann das Verpacken in vorteilhafter Weise rationell erfolgen und überflüssige Verpackungsschritte und Verpackungsbestandteile können eingespart werden. Darüber hinaus befindet sich das zu temperierende Füllgut selbst in evakuierter Umgebung, was sich bei manchen Waren positiv auf die Haltbarkeit auswirken kann.

Andererseits können auch mit den erfindungsgemäßen Vakuumisolationselementen oder Vakuumisolationspaneelen, wobei das bzw. die Vakuumisolationspaneele einschließlich der jeweiligen evakuierten Umhüllung zu einer dreidimensionalen Raumform geknickt sind, boxförmige Vakuumisolierungen aufgebaut werden, welche ein nicht evakuiertes Nutzvolumen umschließen, wie dies z.B. auch bei klassischen Polystyrolboxen der Fall ist. Diese Ausführungsform hat Vorteile, wenn eher universellere Vakuumisolationsverpackungen, z.B. zum Transport mehrerer verschiedener und von der Form her variable Füllgüter, gewünscht sind.

Vorzugsweise werden hierzu ein erstes und zweites Vakuumisolationspaneel einschließlich der evakuierten Umhüllung zu einer dreidimensionalen Raumform geknickt und greifen klammerartig ineinander, um eine boxförmige Vakuumisolierung zu bilden, welche ein nicht evakuiertes Nutzvolumen umschließt.

Z.B. können das erste und zweite Vakuumisolationselement einschließlich der evakuierten Umhüllung jeweils U-förmig geknickt werden und um 90° verdreht ineinandergreifen, so dass sie gemeinsam eine allseitig geschlossene quaderförmige Vakuumisolierung bilden.

Mit den Vakuumisolationspaneelen können somit insbesondere mehr oder weniger rechteckige oder quaderförmige Hohlkörper aufgebaut werden, deren inneres Nutzvolumen nicht evakuiert ist, aber allseitig und vollständig von Vakuumisolationsschichten umgeben ist. Gegebenenfalls sind aber aus zwei Vakuumisolationspaneelen auch Taschen, in welche zu temperierendes Füllgut eingelegt wird, herstellbar.

Die sechs Seiten einer allseitig geschlossenen quaderförmigen Vakuumisolierung, welche das Füllgut von allen sechs Seiten wärmeisoliert, kann demnach z.B. aus zwei U-förmig geknickten Vakuumisolationspaneelen oder aus einem 3-fach geknickten Vakuumisolationspaneel, welches vier Seiten bildet und einem oberen und unteren Vakuumisolationspaneel gebildet werden.

Mit anderen Worten werden mehrere Seiten einer später einen Quader bildenden Kontur in einem Stück evakuiert, so dass mittels eines oder mehrerer, ggf. aber weniger als sechs, Vakuumisolationspaneele eine quaderförmige Vakuumisolationsverpackung gebildet werden kann, wobei die Vakuumisolationspaneele im evakuierten Zustand geknickt werden können.

Die Vakuumisolationskiste kann ferner noch eine nicht evakuierte Innenbox und/oder eine nicht evakuierte äußere Transportbox, z.B. aus Wellpappe oder Wabenpappe, umfassen, wobei die boxförmige oder quaderförmige Vakuumisolierung in die äußere Transportbox eingesetzt wird und/oder die Innenbox in die boxförmige Vakuumisolierung eingesetzt wird. Hierdurch entsteht eine Versandkiste in Form einer Vakuumisolationskiste mit mehrschichtiger Wandung bestehend aus der nicht evakuierten äußeren Transportbox, der boxförmigen oder quaderförmigen Vakuumisolierung und der nicht evakuierten Innenbox, so dass die boxförmige oder quaderförmige Vakuumisolierung innen und/oder außen durch die nicht evakuierte Innenbox und/oder die nicht evakuierte äußere Transportbox gegen Beschädigung geschützt ist. Diese Bauform kann in Bezug auf die Lebensdauer und die Recycelbarkeit der Bestandteile der Vakuumisolationskiste vorteilhaft sein.

Um eine verbesserte Geräuschisolation zu erreichen können die Plattenelemente mit einer Druck-absorbierenden Schicht z.B. aus Kork oder Stoff beschichtet sein

Im Folgenden wird die Erfindung anhand von Ausführungsbeispielen und unter Bezugnahme auf die Figuren näher erläutert, wobei gleiche und ähnliche Elemente teilweise mit gleichen Bezugszeichen versehen sind und die Merkmale der verschiedenen Ausführungsbeispiele miteinander kombiniert werden können.

### Kurzbeschreibung der Figuren

Es zeigen:
- Fig. 1: eine teilweise geschnittene perspektivische Explosionsdarstellung eines Kerns gemäß einer ersten Ausführungsform der Erfindung,
- Fig. 2: eine teilweise geschnittene perspektivische Darstellung eines Vakuumisolationspaneels mit dem Kern aus Fig. 1,
- Fig. 3: eine Schnittdarstellung durch das Vakuumisolationspaneel aus Fig. 2 (nicht maßstabsgerecht),
- Fig. 4: eine teilweise geschnittene perspektivische Darstellung eines Vakuumisolationspaneels gemäß einer weiteren Ausführungsform der Erfindung,
- Fig. 5: eine Schnittdarstellung durch das Vakuumisolationspaneel aus Fig. 4,
- Fig. 6: eine Schnittdarstellung durch eine Vakuumisolationsverpackung gemäß einer weiteren Ausführungsform der Erfindung,
- Fig. 7: eine Schnittdarstellung durch eine Vakuumisolationsverpackung gemäß einer weiteren Ausführungsform der Erfindung,
- Fig. 8: eine teilweise geschnittene perspektivische Darstellung einer Vakuumisolationsverpackung gemäß einer weiteren Ausführungsform der Erfindung,
- Fig. 9: eine Seitenansicht einer Vakuumisolationsverpackung gemäß einer weiteren Ausführungsform der Erfindung,
- Fig. 10: eine teilweise geschnittene perspektivische Darstellung einer Vakuumisolationsverpackung gemäß einer weiteren Ausführungsform der Erfindung,
- Fig. 11: eine Seitenansicht eines Vakuumisolationspaneels gemäß einer weiteren Ausführungsform der Erfindung,
- Fig. 12: eine Seitenansicht eines Vakuumisolationspaneels gemäß einer weiteren Ausführungsform der Erfindung,
- Fig. 13: eine perspektivische Darstellung zweier Vakuumisolationspaneele zum Aufbau einer buchsförmigen Vakuumisolierung gemäß einer weiteren Ausführungsform der Erfindung,
- Fig. 14: eine teilweise geschnittene perspektivische Explosionsdarstellung einer buchsförmigen Vakuumisolierung,
- Fig. 15: eine teilweise geschnittene perspektivische Darstellung einer Vakuumisolationskiste mit der buchsförmigen Vakuumisolierung aus Fig. 14 und Innenbox und äußere Transportbox,
- Fig. 16: eine teilweise geschnittene perspektivische Darstellung einer Vakuumisolationskiste gemäß einer weiteren Ausführungsform der Erfindung,
- Fig. 17: eine teilweise geschnittene perspektivische Darstellung eines Vakuumisolationspaneels gemäß einer weiteren Ausführungsform der Erfindung.

### Detaillierte Beschreibung der Erfindung

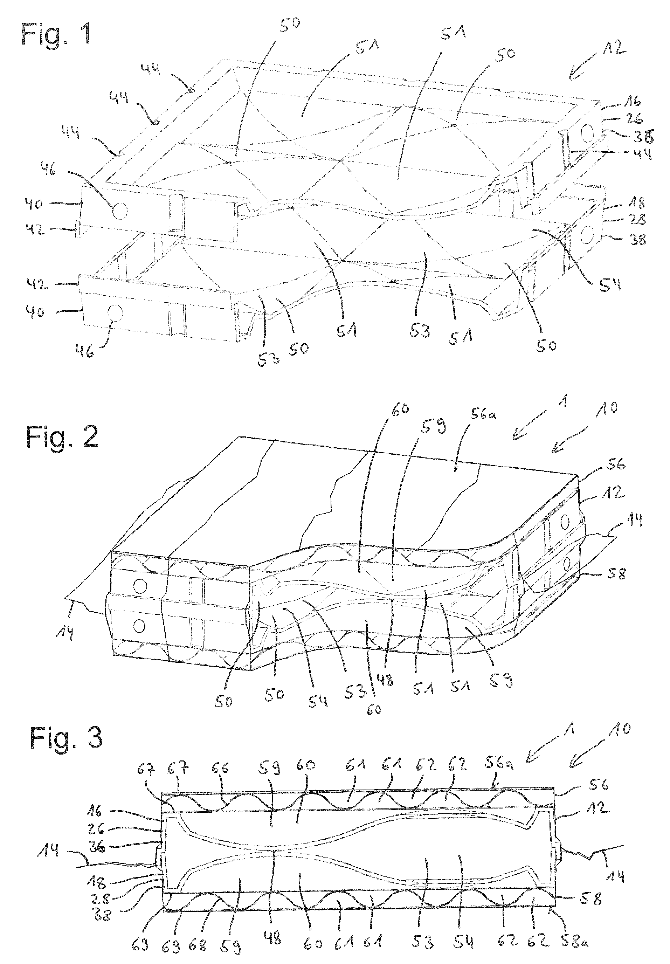

Bezugnehmend auf die Fig. 1 bis 3 ist das Vakuumisolationselement 1 in Form eines Vakuumisolationspaneels 10 ausgebildet, dessen Kern 12 aus einem ersten und zweiten Plattenelement 16, 18 besteht. Das erste und zweite Plattenelement 16, 18 sind in diesem Beispiel als erstes beziehungsweise zweites Kunststoffformteil 26, 28, in Form von zwei invers dreidimensional geformten Kunststoffschichten 36, 38 ausgebildet. Die dreidimensional geformten Kunststoffschichten 36, 38 können zum Beispiel durch Prägen oder Tiefziehen aus einer ebenen Kunststoffschicht oder -platte hergestellt werden, beispielsweise aus 1 mm dicken ungeschäumten Polystyrolschicht. Die Kunststoffformteile 26, 28 weisen jeweils einen umlaufenden Rand 40 auf, welcher mit Haltestreifen 42 mit dem komplementären Gegenstück ineinandergreift, wenn die beiden Kunststoffformteile 26, 28 ineinandergesteckt sind. Der umlaufende Rand 40 weist ferner halbzylindrische Einprägungen 44 auf, welche die Kunststoffformteile 26, 28 versteifen, sowie Öffnungen 46, um das innere Isolationsvolumen 54 gut evakuieren zu können, wenn die beiden Kunststoffformteile 26, 28 ineinandergesteckt sind.

Die beiden geformten Kunststoffformteile 26, 28 weisen an Ihrer Oberfläche eine Mehrzahl von in diesem Beispiel beidseitigen domförmigen Vertiefungen 50, 51 auf, welche sich im inneren Isolationsvolumen 54 invers gegenüberstehen, um zwischen den nach außen gerichteten Vertiefungen 50 eine Mehrzahl von Hohlräumen 53 bilden, welche miteinander kommunizieren. Die sich gegenüberstehenden nach innen gerichteten Vertiefungen 51 stützen sich an Stützstellen 48 gegeneinander ab (vgl. Fig. 3). Der Kern 12 wird zur weiteren Stützung des Vakuumisolationspaneels 10 auf beiden Seiten noch mit einer Wellpappe 56, 58 gedeckt, welche einerseits in Hohlräumen 59 zwischen den Kunststoffformteilen 26, 28 und den Wellpappen 56, 58 ein weiteres evakuierbares Isolationsvolumen 60 und zusätzlich innerhalb der beiden Wellpappen 56, 58 in Hohlräumen 61 ein weiteres evakuierbares Isolationsvolumen 62 zu bilden. Die Hohlräume 61 bzw. das Isolationsvolumen 62 innerhalb der Wellpappen 56, 58 werden von den wellenförmig geformten inneren Wellpappschichten 66, 68 zwischen den Deckschichten 67, 69 gebildet und stabil aufrechterhalten.

Anschließend wird der gesamte Kern 12 aus den Kunststoffformteilen 26, 28 und den Wellpappen 56, 58 in eine luft- beziehungsweise vakuumdichte Umhüllung 14 aus einer Kunststofffolie, z.B. einem Kunststoffschlauch eingefügt. Anschließend wird die Kunststofffolien-Umhüllung 14 mit einem Vakuumiergerät evakuiert und anschließend verschweißt. Einfache kleine Vakuumiergeräte, insbesondere Rollenvakuumiergeräte für den Küchengebrauch sind mit zugehörigen Kunststoffbeuteln/-folien handelsüblich erhältlich.

Die Kunststofffolie für die Umhüllung 14 kann zur Reduktion der Wärmestrahlung allerdings noch metallisch beschichtet sein (nicht dargestellt), wobei sich eine Metallbeschichtung auf der Innenseite anbietet. Alternativ oder ergänzend kann der Kern 12, in diesem Beispiel können also die äußeren Oberflächen 56a, 58a der Wellpappen 56, 58, metallisch beschichtet sein (nicht dargestellt).

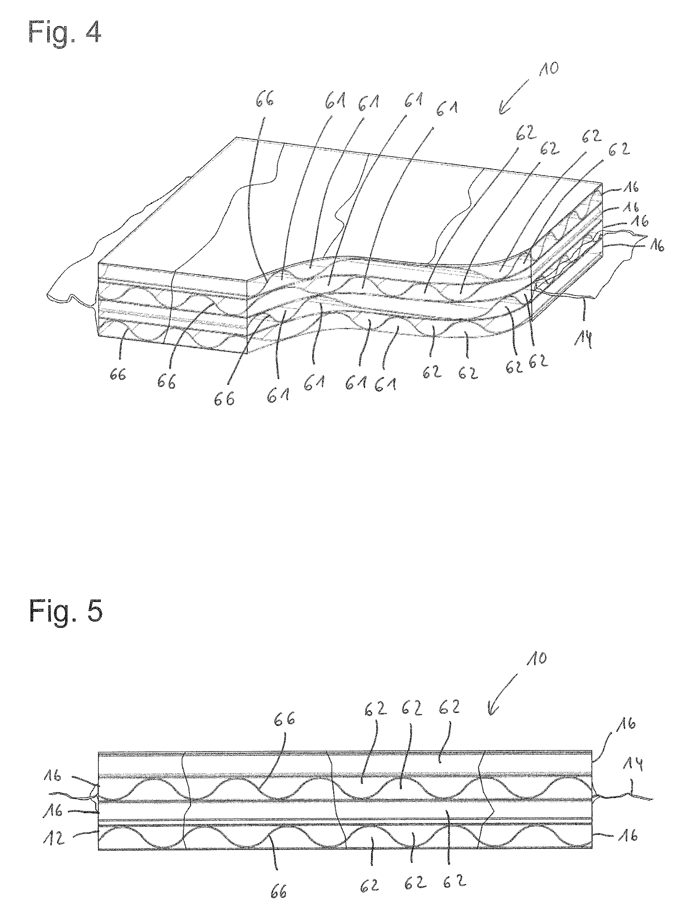

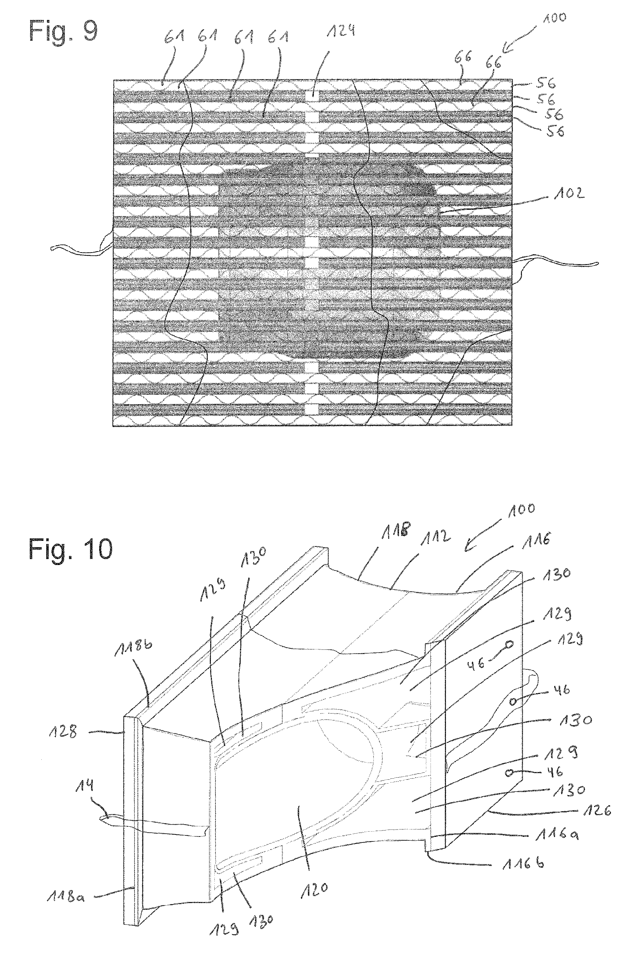

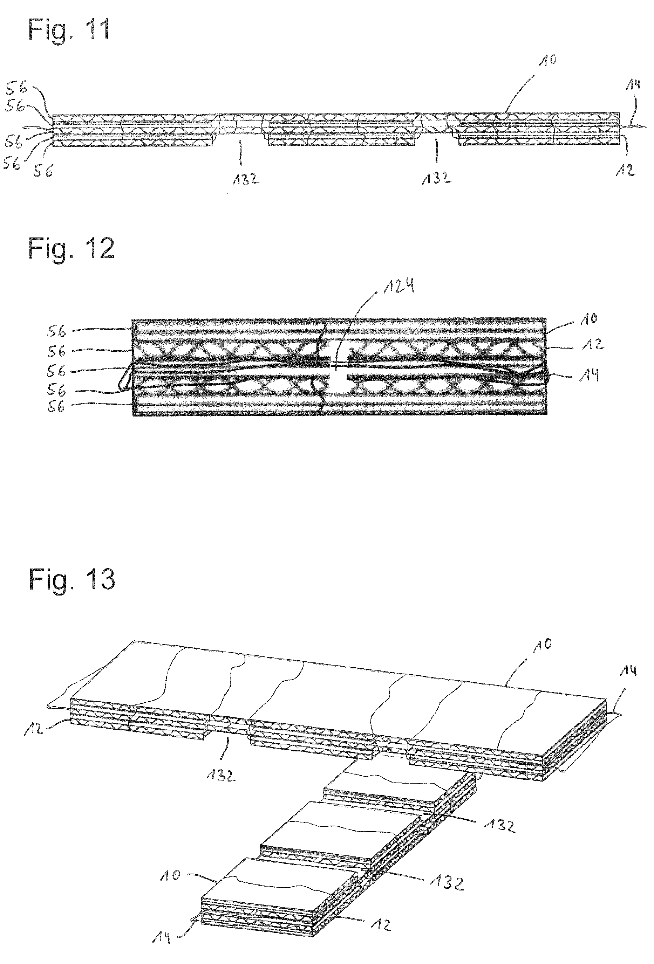

Bezugnehmend auf die Fig. 4 und 5 ist eine weitere Ausführungsform der Erfindung des Vakuumisolationspaneels 10 dargestellt, wobei der flächige Kern 12 ausschließlich aus Plattenelementen 16 aus Strukturpappe in Form von Wellpappe 56 besteht, in diesem Beispiel aus vier Schichten gedeckter Wellpappe 56. Der Kern 12 bestehend aus diesen vier geschichteten Wellpappen 56 ist wiederum in die Kunststofffolienumhüllung 14 eingeschweißt und in dieser evakuiert. Versuche haben gezeigt, dass handelsübliche gedeckte Wellpappe 56, insbesondere gedeckte Wellpappe 56 mit relativ kleinen Wellenstrukturen bereits hinreichend stabil ist, um das Isolationsvolumen 62, welches durch die gewellten Schichten 66 der Wellpappe 56 zwischen den Deckschichten 67 in Form der Hohlräume 61 gebildet wird, im evakuierten Zustand stabil aufrechtzuerhalten. Im vorliegenden Beispiel wird die Stabilität durch Überkreuzlegung der Wellpappen 56 weiter erhöht. Die Kommunikation der einzelnen Hohlräume 61 kann an den Stirnseiten der Wellpappen 56 stattfinden, es können aber zur Verbesserung der Kommunikation auch quer zur Wellenschicht verlaufende Spalte in den Schichten aus Wellpappe 56 vorgesehen werden (vgl. Fig. 9, 12). Alternativ sind auch Wabenpappen einsetzbar, sofern die Kommunikation zwischen den einzelnen Waben gewährleistet ist.

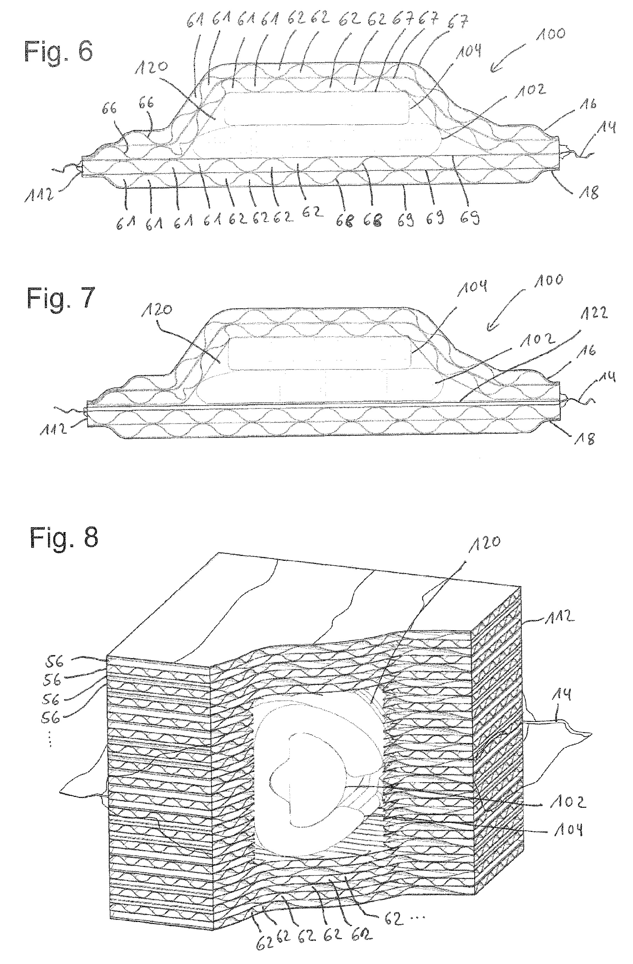

Bezugnehmend auf Fig. 6 ist eine Vakuumisolationsverpackung 100 dargestellt, in welcher ein temperaturempfindliches Füllgut 102, zum Beispiel Steakfleisch sowie ein Kühlakku 104 eingeschlossen sind. Die Vakuumisolationsverpackung 100 besteht aus oberen und unteren plattenförmigen Elementen 16, 18, welche wiederum jeweils aus zwei Schichten Wellpappe 56, 58 bestehen. Der Verpackungskern 112 besteht in diesem Beispiel demnach aus insgesamt vier Schichten Wellpappe 56, 58 und definiert ein evakuiertes Nutzvolumen 120 zwischen den beiden Plattenelementen 16, 18 sowie ein evakuiertes Isolationsvolumen 62 innerhalb der plattenförmigen Elemente 16, 18, gebildet durch die Hohlräume 61 zwischen den gewellten Schichten 66, 68 und den Deckschichten 67, 69 der Wellplatten 56, 58.

Zur Herstellung der Vakuumisolationsverpackung 100 werden das Füllgut 102 und der Kühlakku 104 zwischen den beiden plattenförmigen Elementen 16, 18 sandwichartig angeordnet und anschließend wird die gesamte Anordnung in der Kunststofffolien-Umhüllung 14 evakuiert und diese anschließend verschweißt. Dabei schmiegt sich das obere plattenförmige Element 16 bestehend aus zwei Wellpappschichten 56, welche in diesem Beispiel nicht überkreuz gelegt sind, im Großen und Ganzen an die Form des Füllguts 102 und des Kühlakkus 104 an, sodass eine sandwichartige Vakuumisolationsverpackung 100 für das Füllgut 102 und den Kühlakku 104 gebildet wird, wobei das Füllgut 102 und der Kühlakku 104 im selben Arbeitsschritt gleich mit vakuumiert wird. Mit anderen Worten befindet sich im evakuierten Zustand das Füllgut 102 und der Kühlakku 104 in dem evakuierten Nutzvolumen 120.

Bezugnehmend auf Fig. 7 kann unter dem Füllgut noch eine versteifende Zwischenschicht 122 angeordnet sein, u.a. damit das untere plattenförmige Element 18 eben bleibt. Ansonsten entspricht die Ausführungsform in Fig. 7 der Ausführungsform in Fig. 6.

Bezugnehmend auf Fig. 8 ist ein Verpackungskern 112 dargestellt, der aus einer Vielzahl von Wellpappen 56 gebildet wird, wobei eine Mehrzahl der innengelegenen Wellpappen 56 innen ausgestanzt sind, um ein definiertes evakuierbares Nutzvolumen 120 zu bilden, in welchem das Füllgut 102 mit einem in diesem Beispiel als weiches Gelpad ausgebildeten Kühlakku 104 angeordnet ist. Im Gegensatz zu den Ausführungsformen in Fig. 6 und 7 ist der Verpackungskern 112 in diesem Ausführungsbeispiel so stabil ausgebildet, dass das Nutzvolumen 120 stabil und im Wesentlichen unverändert aufrechterhalten wird, wenn der Verpackungskern 112 in der Kunststofffolienumhüllung 14 evakuiert wird. Dadurch lastet anders als bei den Ausführungsformen in Fig. 6 und 7 im Wesentlichen keine durch den Atmosphärendruck verursachte äußere Kraft auf dem Füllgut 102, so dass auch empfindliches Füllgut 102 wie zum Beispiel eine Glasflasche vakuumisoliert verpackt werden kann. Der Verpackungskern 112 erfüllt in diesem Beispiel demnach eine dreifach-Funktion, nämlich erstens die Definition des stabilen evakuierten Nutzvolumens 120, zweitens die Definition des evakuierten Isolationsvolumens 62 innerhalb der Wellpappen 56 und drittens eine stoßdämpfende Verpackung des Füllgutes 112.

Bezugnehmend auf Fig. 9 ist eine ähnliche Ausführungsform wie in Fig. 8 dargestellt, in welcher ein Glasbehälter als Füllgut 102 in der Vakuumisolationsverpackung 100 vakuumiert ist. Die Wellpappschichten 56, bzw. zumindest deren Wellenschichten 66, sind im mittleren Bereich ausgespart, sodass ein Spalt 124 entsteht, über welchen die kanalartigen Hohlräume 61 besser kommunizieren auch wenn sich die Folien-Umhüllung 14 bereits an die Stirnseiten des Kerns 12 bzw. des Verpackungskerns 112, an denen die Hohlräume 61 ebenfalls miteinander kommunizieren, angesaugt hat. Dadurch kann das Evakuieren der Vielzahl von Schichten aus Wellpappe 56 beschleunigt werden.

Bezugnehmend auf Fig. 10 umfasst die Vakuumisolationsverpackung 100 einen Verpackungskern 112, welcher zwei Kunststoffformteile 116, 118 in Form von Kunststoff-Halbschalen umfasst. Die geformten Kunststoff-Halbschalen bilden das evakuierte Nutzvolumen 120 sowie mit Hohlräumen 129 das evakuierte Isolationsvolumen 130. Die beiden geformten Kunststoff-Halbschalen 116, 118 sind an den jeweiligen Außenseiten 116a, 118a offen und weisen um die jeweilige Öffnung einen umlaufenden Stabilisierungsrand 116b, 118b auf, auf welchem jeweils eine Deckplatte 126, 128 aufliegt. Die Deckplatten 126, 128 weisen Öffnungen 46 zur Entlüftung beim Evakuieren auf. In dem evakuierbaren stabilen Nutzvolumen 120 kann wiederum ein stoßempfindliches Füllgut, wie zum Beispiel eine Arzneimittelflasche oder ähnliches vakuumisoliert und stoßgeschützt transportiert werden, nachdem der Kern 112 mit dem Füllgut 102 in der Folienumhüllung 14 vakuumiert ist.

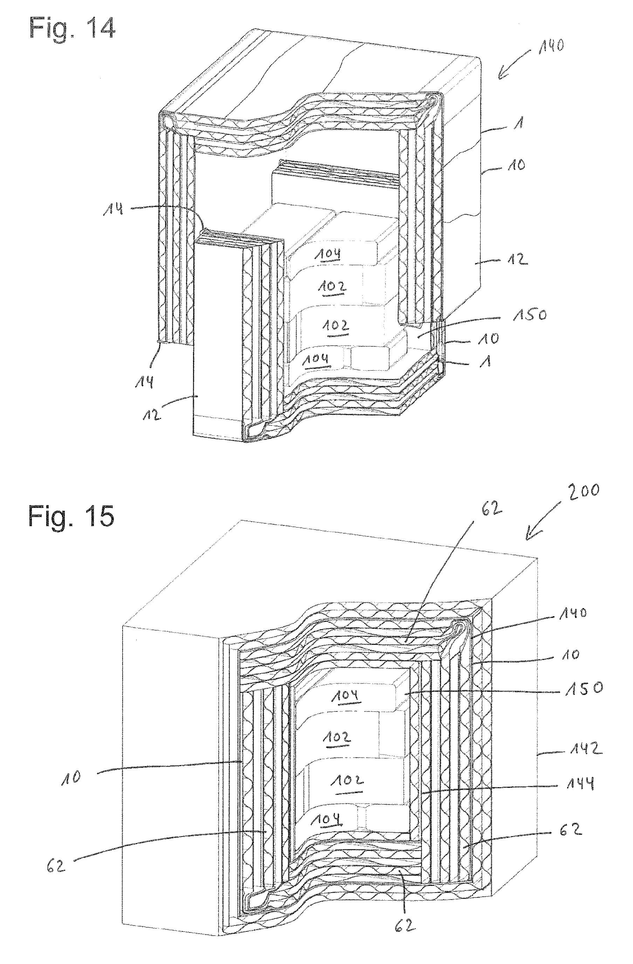

Bezugnehmend auf die Fig. 11 bis 14 lässt sich aus den Vakuumisolationspaneelen 10 eine Vakuumisolationskiste 200 aufbauen. Hierzu werden zum Beispiel zwei Vakuumisolationspaneele 10 mit jeweils einem Kern 12 aus in diesem Beispiel fünf Schichten Wellpappe 56 hergestellt. Ein Teil der Wellpappschichten 56, im vorliegendem Beispiel die beiden unteren Wellpappschichten sind an Knicklinien 132 ausgespart. Somit kann nach dem Evakuieren und Einschweißen des Kerns 12 in der Kunststofffolienumhüllung 14 das Vakuumisolationspaneel 10 relativ genau im evakuierten Zustand an den vordefinierten Knicklinien 132 zu einer U-Form geknickt werden (vgl. Fig. 14). Weiter Bezugnehmend auf Fig. 14 können dann zwei solcher U-förmig geknickter Vakuumisolationspaneele 10 um 90° gedreht zu einer würfel- oder boxförmigen Vakuumisolierung 140 zusammengesteckt werden. Die so gebildete boxförmige Vakuumisolierung 140 bildet wiederum ein in diesem Beispiel nicht evakuiertes Nutzvolumen 150, in welchem das Füllgut 102 mit Kühlakkus 104, isoliert durch die evakuierten Schichten aus Wellpappe 56 angeordnet und so thermisch isoliert transportiert werden kann. Alternativ zu den Kühlakkus 104 ist auch denkbar, einen Wärmespeicher zu verwenden, wenn das Füllgut 102 nicht gekühlt, sondern gewärmt temperaturgeführt transportiert werden soll.

Bezugnehmend auf Fig. 15 kann die boxförmige Vakuumisolierung 140 in eine äußere Transportbox 142 eingesetzt werden und innerhalb der boxförmigen Vakuumisolierung 140 kann eine Innenbox 144 eingesetzt werden, welche das nichtevakuierte Nutzvolumen 150 definiert. Die äußere Transportbox 142 und die Innenbox 144 sind dabei zum Beispiel gewöhnliche Boxen aus Wellpappe und sind nicht eingeschweißt und nicht evakuiert.

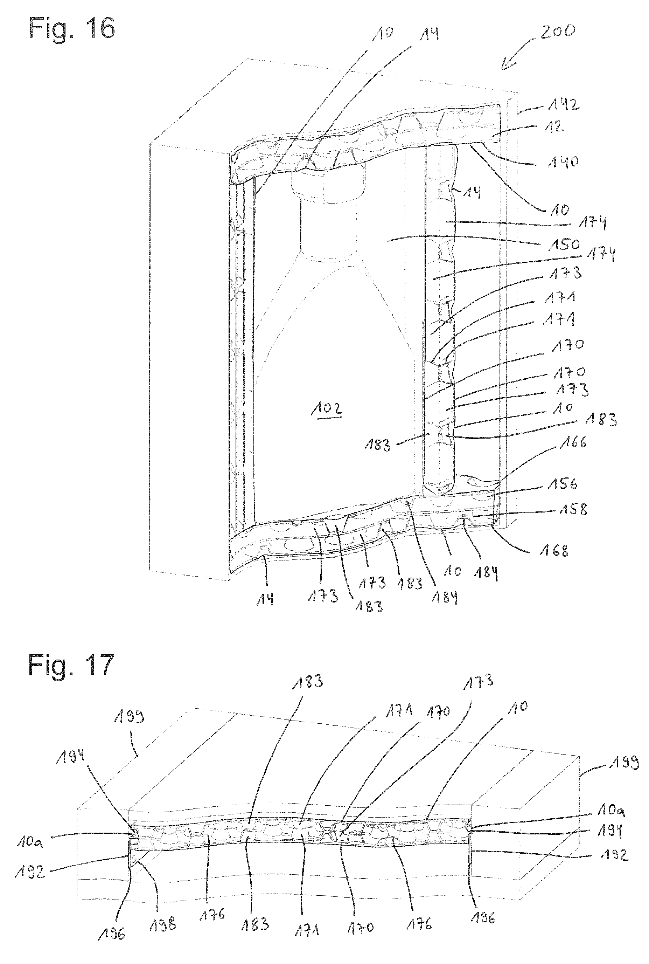

Bezugnehmend auf Fig. 16 ist eine weitere Ausführungsform einer Vakuumisolationskiste 200 dargestellt, bei welcher eine Flasche als Füllgut 102 allseitig von Vakuumisolationspaneelen 10 umgeben ist. Auch hier bilden die Vakuumisolationspaneele 10 gemeinsam eine boxförmige Vakuumisolierung 140, die das nicht evakuierte Nutzvolumen 150 umgeben. Die boxförmige Vakuumisolierung 140 ist ebenfalls in eine Transportbox 142 eingesetzt. Die in diesen Beispiel verwendeten Vakuumisolationspaneele 10 verwenden statt Schichten aus Wellpappe zwei geformte Kunststoffschichten 156, 158 in Form von sogenannter Noppenfolie, wie sie zum Beispiel als Mauerdrainage im Bauwesen verwendet wird. Solche Noppenfolie ist im Bauwesen handelsüblich als Rollenware zu erwerben und äußerst kostengünstig. Die von der Noppenfolie 156, 158 gebildeten geformten Kunststoffschichten 166, 168 weisen nach innen gerichtete Vertiefungen 171 auf, welche sich gegeneinander abstützen. Durch die Verwendung von zumindest zwei Noppenfolien 156, 158 werden durch die nach außen gerichteten Vertiefungen 170 zwischen den noppenförmigen nach innen gerichteten Vertiefungen 171 eine Vielzahl von Hohlräumen 173 zwischen den beiden Noppenfolien 156, 158 sowie in den noppenförmigen nach innen gerichteten Vertiefungen 171 eine Vielzahl von Hohlräumen 183 zwischen den Noppenfolien 156, 158 und der Folienumhüllung 14 gebildet. Diese Hohlräume 173, 183 bilden evakuierbare Isolationsvolumina 174, 184 des von den beiden Noppenfolien 156, 158 gebildeten flächigen Kerns 12.

Bezugnehmend auf Fig. 17 weist eine weitere Ausführungsform des Vakuumisolationspaneels 10 als Wärmedämmpaneel zum Beispiel an zwei stirnseitigen Enden 10a jeweils einen Befestigungsstreifen 192 auf, welcher mit in die Kunststofffolien-Umhüllung 14 eingeschweißt ist. Demnach befinden sich Schweißnähte 194 zwischen dem evakuierten Kern 12 und dem jeweiligen Befestigungsstreifen 192 und weitere Schweißnähte 196 an den Außenkanten der in die Kunststofffolienumhüllung 14 miteingefügten Befestigungsstreifen 192. Die Befestigungsstreifen 192 können an den Schweißnähten 194 umgeknickt werden, so dass das Vakuumisolationspaneel 10 stirnseitig an Stellen 198 penetrierend, zum Beispiel entgegengesetzt zwischen zwei Dachbalken 199, befestigt werden kann, ohne das Vakuum innerhalb des Vakuumisolationspaneels 10 zu brechen. Diese Bauform ist für die Anwendung im Baubereich, zum Beispiel bei der Dämmung von Dächern oder Fassaden von Häusern vorteilhaft. Insbesondere hier kann es noch vorteilhaft sein, die Umhüllung in eine weitere Umhüllung einzuschließen und ggf. auch die weitere (Folien-)Umhüllung zu evakuieren, so dass der Kern in zwei geschachtelte unabhängig voneinander evakuierte (Folien-)Umhüllungen eingeschlossen ist.

Zwischen den nach innen gerichteten Noppen oder Vertiefungen 171 können Verbindungskanäle 176 vorgesehen sein, damit die nach innen gerichteten Noppen oder Vertiefungen 171 auch dann noch miteinander kommunizieren können, wenn sich die Folien-Umhüllung 14 an die nach außen gerichteten Vertiefungen 170 angesaugt hat.

Bei den Ausführungsformen in Fig. 4 bis 9 und 11 bis 17 ist besonders vorteilhaft, dass sie der Benutzer beim Verpacken des Füllguts 102 selbst vor Ort konfektionieren kann. Hierzu schneidet der Benutzer den Kern 12 bzw. Verpackungskern 112 in die gewünschte Form und Größe, z.B. mit einem Messer oder einer Schere, fügt den Kern 12 bzw. Verpackungskern 112 in die Folien-Umhüllung 14 ein und evakuiert und verschweißt die Umhüllung 14 mit einem Vakuumiergerät. Die Plattenelemente 16, 18 des Kerns 12 bzw. Verpackungskerns 112 sind demnach zum Schneiden mit einem Messer oder einer Schere hergerichtet.

Das erfindungsmäße Vakuumisolationselement bzw. -paneel eignet sich nicht nur als Wärmedämmung, sondern kann auch als Schalldämmung verwendet werden. Es kann unter anderem als Bestandteil eines Raumteilers z.B. zusammen mit einem bepflanzten Rankgitter verwendet werden. Eine weitere Anwendung als Schalldämmpaneel ist in Lautsprecherboxen möglich, z.B. um das Frequenzspektrum der Lautsprecherbox zu verändern.

Es ist dem Fachmann ersichtlich, dass die vorstehend beschriebenen Ausführungsformen beispielhaft zu verstehen sind und die Erfindung nicht auf diese beschränkt ist, sondern in vielfältiger Weise variiert werden kann, ohne den Schutzbereich der Ansprüche zu verlassen. Ferner ist ersichtlich, dass die Merkmale unabhängig davon, ob sie in der Beschreibung, den Ansprüchen, den Figuren oder anderweitig offenbart sind, auch einzeln wesentliche Bestandteile der Erfindung definieren, selbst wenn sie zusammen mit anderen Merkmalen gemeinsam beschrieben sind. Insbesondere gelten die Merkmale die in Zusammenhang mit dem Vakuumisolationselement offenbart sind auch für die Vakuumisolationsverpackung und die Vakuumisolationskiste als offenbart und umgekehrt.

## Patentansprüche

1. Vakuumisolationselement (1) umfassend einen Kern (12) und eine flexible vakuumdichte Umhüllung (14),
wobei der Kern (12) in der Umhüllung (14) vakuumdicht eingeschlossen und evakuiert ist, und der Kern (12) zumindest soweit formstabil ist, dass er im evakuierten Zustand ein evakuiertes Isolationsvolumen (54, 60, 62, 174, 184) innerhalb der Umhüllung (14) entgegen dem atmosphärischen Druck, der auf der Umhüllung (14) lastet, aufrecht erhält,
wobei das von dem Kern (12) aufrecht erhaltene evakuierte Isolationsvolumen (54, 60, 62, 174, 184) von einer Mehrzahl von Hohlräumen (53, 59, 61, 173, 183) gebildet wird,
wobei der Kern (12) von einem oder mehreren Plattenelementen (16, 18) gebildet wird, die eine formgebende Struktur aufweisen, welche die Mehrzahl der Hohlräume (53, 59, 61, 173, 183) bilden, wobei
i) im Fall eines Plattenelementes (16, 18) die Hohlräume (61, 183) von der formgebenden Struktur innerhalb des Plattenelements (16, 18) und/oder zwischen Vertiefungen (52) der formgebenden Struktur des Plattenelements (16, 18) und der Umhüllung (14) gebildet werden oder
ii) im Fall mehrerer Plattenelemente (16, 18) die Hohlräume (53, 59, 61, 173, 183) von der formgebenden Struktur innerhalb der Plattenelemente (16, 18), zwischen den Plattenelementen (16, 18) und/oder zwischen Vertiefungen (52) der formgebenden Struktur des Plattenelements (16, 18) und der Umhüllung (14) gebildet werden, und
wobei die Hohlräume (53, 59, 61, 173, 183) zumindest beim Evakuieren miteinander kommunizieren, um innerhalb der Umhüllung (14) gemeinsam evakuiert zu werden.

2. Vakuumisolationselement (1) gemäß Anspruch 1, wobei
i) im Fall eines Plattenelementes (16, 18) das Plattenelement (16, 18) als geformte Kunststoffschicht (36, 38, 156, 158) ausgebildet ist, welche eine Mehrzahl von Vertiefungen (171) definiert und die Hohlräume (183) zwischen den Vertiefungen (171) der Kunststoffschicht (36, 38) und der Umhüllung (14) gebildet werden oder
ii) im Fall mehrerer Plattenelemente (16, 18) zumindest eines der Plattenelemente (16, 18) als geformte Kunststoffschicht (36, 38, 156, 158) ausgebildet ist und die Hohlräume (53, 59, 173, 183) zwischen den Vertiefungen (50, 51, 170, 171) der zumindest einen Kunststoffschicht (36, 38, 156, 158) und der Umhüllung (14) und/oder zwischen den Kunststoffschichten (36, 38, 156, 158) gebildet werden.

3. Vakuumisolationselement (1) gemäß einem der vorstehenden Ansprüche, wobei der Kern (12) zumindest zwei invers geformte Kunststoffschichten (36, 38, 156, 158) umfasst, welche nach innen gerichtete Vertiefungen (51, 171) aufweisen, die sich an den jeweiligen Innenseiten an Stützstellen (48) gegeneinander abstützen, wenn der Kern (12) innerhalb der Umhüllung (14) evakuiert ist, um die Stützkraft gegen den Atmosphärendruck aufzubringen.

4. Vakuumisolationselement (1) gemäß Anspruch 2 oder 3, wobei die geformten Kunststoffschichten (36, 38) jeweils einen Randbereich (40) aufweisen, welche ineinander steckbar sind, um einen umlaufenden randseitigen Abschluss der beiden ineinander gesteckten Kunststoffschichten (36, 38) zu bilden und/oder wobei die geformten Kunststoffschichten (36, 38) Öffnungen (46) enthalten, um den Innenbereich zwischen den Kunststoffschichten (36, 38) evakuieren zu können.

5. Vakuumisolationselement (1) gemäß einem der vorstehenden Ansprüche,
wobei der Kern (12) zumindest eine Strukturpappe, insbesondere eine Schicht aus Wellpappe (56, 58) oder Wabenpappe umfasst.

6. Vakuumisolationselement (1) gemäß Anspruch 5,
wobei der Kern (12) mehrere flächig übereinander liegende Schichten aus Strukturpappe, insbesondere Wellpappe (56, 58) und/oder Wabenpappe, umfasst.

7. Vakuumisolationselement (1) gemäß einem der vorstehenden Ansprüche,
wobei der Kern (12) einen Innenteil aus einer oder mehreren geformten Kunststoffschichten (36, 38) umfasst, welche auf einer oder beiden Seiten von einer bzw. zwei Pappen, insbesondere Wellpappen (56, 58) oder Wabenpappen, gedeckt sind.

8. Vakuumisolationselement (1) gemäß einem der vorstehenden Ansprüche,
wobei der Kern (12) mehrere flächig übereinander liegende Platten, insbesondere mehrere Schichten aus Strukturpappe, insbesondere Wellpappe (56, 58) und/oder Wabenpappe, umfasst und zumindest eine der Schichten Aussparungen aufweist, derart dass die Aussparungen vordefinierte Knicklinien (132) bilden, um das Vakuumisolationselement (1) an den vordefinierten Knicklinien (132) zu einer dreidimensionalen Raumform zu knicken.

9. Vakuumisolationselement (1) gemäß einem der vorstehenden Ansprüche,
wobei an zumindest einer Stirnseite (10a) des Vakuumisolationselements (1) ein Befestigungsstreifen (192) in die Umhüllung (14) eingelegt ist, wobei das Vakuumisolationselement (1) durch die Umhüllung (14) und den Befestigungsstreifen (192) hindurch penetrierend befestigbar ist, in dem die Umhüllung (14) zwischen dem Kern und dem Befestigungsstreifen (192) verschweißt ist, so dass das Vakuum innerhalb des Kerns (12) erhalten bleibt, wobei das Vakuumisolationselement (1) stirnseitig durch den zumindest einen Befestigungsstreifen (192) innerhalb der Umhüllung (14) in Richtung parallel zu dem Plattenelement (16, 18) festschraubbar oder nagelbar ist, in dem das Vakuumisolationselement (1) zwischen dem Kern (12) und dem zumindest einen Befestigungsstreifen (192) faltbar ist.

10. Vakuumisolationsverpackung (200), umfassend zumindest ein Vakuumisolationselement (1) gemäß einem der vorstehenden Ansprüche.

11. Vakuumisolationsverpackung (100) umfassend einen Verpackungskern (112) und eine flexible vakuumdichte Umhüllung (14),
wobei der Verpackungskern (112) ein Nutzvolumen (120) und ein das Nutzvolumen (120) umgebendes Isolationsvolumen (54, 60, 62, 130, 174, 184) bildet,
wobei ein zu temperierendes Füllgut (102) in dem Nutzvolumen (120) angeordnet ist,
wobei der Verpackungskern (112) mit dem zu temperierenden Füllgut (102) in der Umhüllung (14) vakuumdicht eingeschlossen und evakuiert ist, und der Verpackungskern (112) zumindest soweit formstabil sind, dass er im evakuierten Zustand das evakuierte Isolationsvolumen (54, 60, 62, 130, 174, 184) innerhalb der Umhüllung (14) entgegen dem atmosphärischen Druck, der auf der Umhüllung (14) lastet, aufrecht erhält, und
wobei das zu temperierende Füllgut (102) gemeinsam mit dem Verpackungskern (112) innerhalb derselben Umhüllung (14) evakuiert ist und von dem evakuierten Isolationsvolumen (54, 60, 62, 130, 174, 184) thermisch isoliert wird.

12. Vakuumisolationsverpackung (100) gemäß Anspruch 11, wobei zusätzlich zu dem zu temperierenden Füllgut (102) ein Kühlakku (104) oder ein Wärmespeicherelement in dem Verpackungskern (112) angeordnet ist und gemeinsam mit dem zu temperierenden Füllgut (102) und dem Verpackungskern (112) innerhalb derselben Umhüllung (14) evakuiert ist.

13. Vakuumisolationsverpackung (100) gemäß Anspruch 11 oder 12,
wobei der Verpackungskern (112) ein erstes und zweites Plattenelement (16, 18) umfasst,
wobei das zu temperierende Füllgut (102), gegebenenfalls mit dem Kühlakku (104) oder dem Wärmespeicherelement, sandwichartig zwischen dem ersten und zweiten Plattenelement (16, 18) angeordnet ist und
wobei das zu temperierende Füllgut (102), gegebenenfalls zusammen mit dem Kühlakku (104) oder dem Wärmespeicherelement, gemeinsam mit dem ersten und zweiten Plattenelement (16, 18) innerhalb derselben Umhüllung (14) evakuiert ist.

14. Vakuumisolationsverpackung (100) gemäß einem der Ansprüche 11 bis 13,
wobei der Verpackungskern (112) zumindest ein Kunststoffformteil (116, 118) und/oder eine Vielzahl von Plattenelementen (16, 18), insbesondere geformte Kunststoffschichten (36, 38) und/oder Strukturpappen, insbesondere Wellpappen (56, 58) und/oder Wabenpappen, umfasst, welche das Nutzvolumen (120) und das Isolationsvolumen (54, 60, 62, 130, 174, 184) definieren, wobei das zu temperierende Füllgut (102), gegebenenfalls mit dem Kühlakku (104) oder dem Wärmespeicherelement, in dem so gebildeten Nutzvolumen (120) von dem zumindest einen Kunststoffformteil (116, 118) und/oder den Plattenelementen (16, 18) umgeben angeordnet ist, und das so gebildete Nutzvolumen (120) mit dem zu temperierenden Füllgut (102), gegebenenfalls mit dem Kühlakku (104) oder dem Wärmespeicherelement, evakuiert ist und das zumindest eine Kunststoffformteil (116, 118) und/oder die Anordnung aus den Plattenelementen (16, 18) dabei zumindest soweit formstabil ist, dass sie im evakuierten Zustand dem atmosphärischen Druck, der auf der Umhüllung (14) lastet von sich aus standhalten und somit das evakuierte Nutzvolumen (120) stabil aufrechterhalten bleibt.

15. Vakuumisolationskiste (200) umfassend ein oder mehrere Vakuumisolationselemente (1) gemäß einem der Ansprüche 1 bis 9, wobei das bzw. die Vakuumisolationselemente (1) einschließlich der jeweiligen evakuierten Umhüllung (14) zu einer dreidimensionalen Raumform geknickt sind und eine boxförmige Vakuumisolierung (140) bilden, welche ein nicht evakuiertes Nutzvolumen (150) umschließt, wobei insbesondere zwei Vakuumisolationselemente (1) einschließlich der jeweiligen evakuierten Umhüllung (14) jeweils U-förmig zu einer dreidimensionalen Raumform geknickt sind und klammerartig ineinandergreifen, so dass sie gemeinsam eine allseitig geschlossene quaderförmige Vakuumisolierung bilden, welche das nicht evakuierte Nutzvolumen (150) umschließt.
